# EUROPÄISCHE PATENTANMELDUNG

(11) **EP 4 105 902 A1**
(43) Veröffentlichungstag der Anmeldung: **21.12.2022**
(21) Anmeldenummer: 22172426.3
(22) Anmeldetag: 10.05.2022
(51) Int. Cl.: G07C 9/15, G06V 20/52, G06V 20/64

(54) **DURCHGANGSKONTROLLVORRICHTUNG**

(30) Priorität: 14.06.2021 DE 102021115356
(71) Anmelder: Cambaum GmbH, 76532 Baden-Baden (DE)
(72) Erfinder: Ernst, Fabian, 76547 Sinzheim (DE)
(74) Vertreter: Geitz Truckenmüller Lucht Christ

(57) **Zusammenfassung**

Durchgangskontrollvorrichtung (1) zur Sicherung der Vereinzelung von Personen, die von einem ungesicherten Bereich in einen gesicherten Bereich wechseln, unter Einsatz einer oder mehreren Kameras (2, 2', 2", 2""), vorzugsweise 3D-Kameras, die etwa durch den Einsatz von Stereosystemen, die Aufnahme eines dreidimensionalen räumlichen Bildes ermöglichen, um beispielsweise Abstände zwischen einen Durchgangsbereich (3) passierenden Personen durch eine 3-D-Darstellung zu ermöglichen, wobei mittels einer nachgeschalteten Bildauswertung, die zur Erkennung verschiedener, vorbestimmter zur Erkennung vorgesehener Körperteile des menschlichen Körpers ertüchtig sind, sodass auf der Basis dieser Informationen jeweils ein Skelettbild einer jeden die Durchgangskontrollvorrichtung (1) passierenden Person erzeugt wird, so dass die Anzahl der die Durchgangskontrollvorrichtung (1) passierenden Personen, der Anzahl der erkannten Skelettbilder entspricht.

## Beschreibung

Im Zusammenhang mit der Durchgangskontrolle von Personen, die von einem ungesicherten Bereichen in einen gesicherten Bereich wechseln wollen, hat es sich bewährt, in diesem Zusammenhang zwischen dem ungesicherten Bereich und dem gesicherten Bereich eine Durchgangskontrollvorrichtung zu installieren, innerhalb derer zum einen die Berechtigung der Personen zum Wechsel von dem ungesicherten Bereich in den gesicherten Bereich überprüft wird, sowie auch, dass die fragliche Person keine unerlaubten Gegenstände, etwa Waffen oder Munition oder auch unerlaubte Substanzen, wie etwa Drogen, in den gesicherten Bereich überführen.

Eine weitere Aufgabe der Durchgangskontrollvorrichtung ist es, sicherzustellen, dass sämtliche Personen, die von dem gesicherten in den ungesicherten Bereich übertreten, auch der entsprechenden Kontrolle unterworfen werden, sodass sichergestellt ist, dass jeweils immer nur eine einzelne Person die Durchgangskontrollvorrichtung passiert.

In diesem Zusammenhang sind aus dem Stand der Technik unterschiedliche Lösungen bekannt, insoweit einen gesicherten Übergang von einem ungesicherten Bereich in einen gesicherten Bereich zu ermöglichen.

So ist aus der CH 710 152 B1 eine Durchgangskontrollvorrichtung mit einer schwenkbaren Tür oder einem schwenkbaren Türflügel vorbekannt, der sicherstellt, dass jeweils nur eine Person den Durchgang passieren kann.

Es handelt sich also um eine rein mechanische Sicherung des Durchganges, sodass entsprechend geschultes Sicherheitspersonal sicherstellen muss, dass der Durchgang nicht durch eine etwaige Manipulation der Anlage von zwei oder mehr Personen passiert wird.

Außerdem ist es etwa aus der CH 703 936 A2 vorbekannt, eine solche Durchgangskontrolle mittels eines Drehkreuzes zu realisieren, das üblicherweise jeweils nur von einer Person passiert werden kann. Nachdem insoweit Manipulationsversuche, bei denen gleichzeitig zumindest zwei Personen versuchen, das Drehkreuz zu passieren, festgestellt wurden, schlägt die erfindungsgemäße Lösung vor, eine zusätzliche Überwachung des Übergangsbereiches von dem vorgelagerten, ungesicherten Bereich in den Durchgangsbereich mithilfe eines Laserstrahl zu realisieren, anhand dessen auf den Abstand der passierenden Person geschlossen werden kann, also bei Unterschreitung eines Mindestabstandes ein Alarm ausgelöst wird bzw. das Drehkreuz blockiert wird, um insoweit einen unbefugten Zutritt zu vermeiden.

Aus der DD 298 837 A5 ist es in diesem Zusammenhang vorbekannt, eine Personenschleuse mittels einer im Deckenbereich montierten Kamera zu überwachen. Im Zusammenhang mit jedem einzelnen Durchgang durch die Personenschleuse nimmt die Kamera eine oder mehrere Bilder auf, die dann ausgewertet werden, indem das jeweils aufgenommene Testbild mit einem Referenzbild verglichen wird sowie dann anhand einer Auswertung dieses Vergleiches erkannt wird, ob sich in dem Durchgangsbereich eine oder mehrere Personen aufhalten, wobei dann mit einem Warnton oder einem sonstigen Signal ein möglicher Betrugsversuch signalisiert wird.

Alternativ ist es aus der DE 20 2020 102 870 U1 bekannt, mittels eines Zählsensors die Anzahl der Personen in einem definierten Bereich zu erfassen, wobei in diesem Zusammenhang weitere relevante Parameter, wie etwa die Raumtemperatur erfasst werden, um auch insoweit auf die Anzahl der die Personenschleuse passierenden Personen schließen zu können.

Aus der DE 20 2014 005 9540 U1 ist eine weitere Personenschleuse zur Vereinzelung von Personen beim Übertritt von einem ungesicherten in einen gesicherten Bereich vorbekannt, wobei in diesem Zusammenhang ein Kamerasystem eingesetzt wird. Dabei ist die Durchgangsschleuse beidseitig von zwei Wandelementen begrenzt, wobei zumindest eine der beiden Seitenwände mit mindestens einer 2D-Kamera bestückt ist, die mit einem Weitwinkelobjektiv ausgestattet ist. Hierdurch soll sichergestellt sein, dass die Kamera erkennt, wenn sich mehrere insbesondere zwei Personen im Bereich der Durchgangsschleuse aufhalten. In vorteilhafte Ausgestaltung kann die Kontrollvorrichtung um einen Infrarotstrahl ergänzt werden, der von den in den gesicherten Bereich übertretenden Passagieren unter normalen Umständen so oft unterbrochen wird, wie ein Passagier diesen Bereich passiert. Allerdings ist es in diesem Zusammenhang durchaus denkbar, dass zwei Personen, die sicherstellen, dass zwischen Ihnen so gut wie kein Abstand besteht, den Infrarotstrahl nur einmal unterbrechen.

Ausgehend von diesem Stand der Technik liegt der Erfindung die Aufgabe zugrunde, den Übergang von einem gesicherten in einen ungesicherten Bereich auch dann sicherzustellen, wenn zwei oder mehrere Personen den Durchgangsbereich betreten, und diese Personen dabei darauf achten, bewusst oder unbewusst so stehen, dass zwischen den Personen kein oder so gut wie kein Abstand besteht.

Hierzu schlägt die erfindungsgemäße Vorrichtung eine Lösung vor, die sich exakt auf die Problematik der Vereinzelung der eine Personenschutz passierenden Personen konzentriert, sowie darüber hinaus ohne weiteren Personaleinsatz und insbesondere manipulationssicher gewährleistet, dass jeweils nur eine Person, die Durchgangskontrollvorrichtung passiert, ohne dass beim Passieren der Durchgangskontrollvorrichtung eine weitere, mutmaßlich nicht durchgangsberechtigte Person durch die Durchgangskontrollvorrichtung geschleust wird. Hierzu schlägt die Erfindung eine Durchgangskontrollvorrichtung vor, die die Vereinzelung und damit Kontrolle jeder einzelnen, die Durchgangskontrollvorrichtung passierenden Person, sicherstellt.

Zunächst einmal sieht die erfindungsgemäße Lösung vor, eine übliche Durchgangskontrollvorrichtung, die dazu dient, die Durchgangsberechtigung der den Durchgang passierenden Personen zu prüfen. Dies wird in der Regel dadurch realisiert, dass einer Bilderkennungs- oder Codeerkennungsvorrichtung ein Passierschein, der beispielsweise einen, der passierenden Person ausgehändigten oder digital übermittelten Barcode, enthält, präsentiert werden muss, wobei nach Erkennung der Durchgangsberechtigung, der jeweiligen Person der Zugang in die Durchgangskontrollvorrichtung frei gegeben wird.

Dabei ist die Zugangskontrollvorrichtung gegen einen unbefugten Zugang zunächst mit entsprechenden Absperrungen oder Schwenktüren versehen, die nach Erkennung der Durchgangsberechtigung geöffnet werden, sodass die fragliche Person Einlass in den Durchgangsbereich der Durchgangskontrollvorrichtung erhält. Sobald beispielsweise mit einer den Zugang kontrollierenden Lichtschranke erkannt wird, dass die zugelassene Person in den erwähnten Durchgangsbereich eingetreten ist, also das Lichtsignal der Lichtschranke nicht mehr unterbrochen ist, wird ein Signal an die Türsteuerung übermittelt, dass ein Schließen der genannten Absperrungen oder Schwenktüren ausgelöst, sodass eine Rückwärtsbewegung entgegen der vorgesehenen Durchgangsrichtung, insbesondere ein Verlassen der Durchgangskontrollvorrichtung in dieser Richtung ausgeschlossen ist.

Dieser Durchgangsbereich ist beidseitig von Absperrungen begrenzt, wobei es sich vorzugsweise um durchsichtige Glas, Plexiglas oder sonstige Kunststoffwände handelt, die darüber hinaus außenseitig auf beiden Seiten mit einer oder mehrerer eingespannten Querstreben derart versteift sind, sodass ein seitliches Entweichen oder Übersteigen der seitlichen, beidseitigen Absperrungen weitestgehend ausgeschlossen ist.

Dabei dient der Durchgangsbereich der Durchgangskontrollvorrichtung gleichzeitig der Überprüfung der in diesen Durchgangsbereich eingetretenen Personenzahl, wobei üblicherweise jeweils nur einer Person der Durchgang durch die Durchgangskontrollvorrichtung gestattet ist. Dementsprechend dient die Durchgangskontrollvorrichtung nicht nur der Vereinzelung der den Durchgang passierenden Personen, sondern auch der Überprüfung der den Durchgang passierenden Personenzahl.

Somit ist zunächst die dem Eingang in den Durchgangsbereich gegenüberliegenden Absperrung, die wiederum auch hier üblicherweise von einer einflügeligen oder zweiflügeligen Schwenktür oder einem sonstigen Schwenkelement gebildet wird, verschlossen.

Hierdurch wird für eine kurze, jedoch für die Überprüfung der in den Durchgangsbereich eingetretenen Personenzahl ausreichenden Zeit, der jeweiligen Person der weitere Durchgang der den Durchgang passierenden Person verhindert.

In diesem Zeitraum erfolgt wahlweise mittels einer oder mehrerer Kameras, die entweder oberhalb des Durchgangsbereiches, vorzugsweise an einer den Durchgangsbereich übergreifenden Deckenkonstruktion angeordnet sind, also eine Personenerkennung im Wege einer Draufsicht auf die Person, die Personen erfassen, oder mittels wenigstens zweier Kameras, die dem Durchgangsbereich direkt zugeordnet sind, eine rückseitige und vorderseitige Ansicht der Person aufnehmen.

Die auf diesem Wege erzeugten Bilder werden unmittelbar im Anschluss an deren Aufnahme an eine Datenverarbeitungseinheit übermittelt, die die Bilddaten auswertet, wobei die Bilderkennung mittels entsprechender Vergleichsalgorithmen dazu ertüchtigt ist, zusätzlich Körperpartien, wie etwa Kopf, Arme und Beine zu erkennen, sowie anhand der auf diesem Wege gewonnenen Daten, die Anzahl, der sich in der Durchgangskontrollvorrichtung befindlichen Personen als Zahlenwert und/oder in einer Graphik, die entweder die erkannten Umrisse der erkannten Personen anzeigt oder symbolische Skelettbilder, die in allen Fällen eine sofortige Erkennung der Anzahl der in der Durchgangskontrollvorrichtung befindlichen Personen anzeigt und vorzugsweise an eine zentrale Überwachungseinheit übermittelt.

In Abhängigkeit von diesen Bildinformationen kann entweder unter Zwischenschaltung von Bedienpersonal oder vorzugsweise selbsttätig, die Freigabe des Durchgangs durch die Durchgangskontrollvorrichtung erfolgen, also die dem Zugang der Durchgangskontrollvorrichtung gegenüberliegende Absperrung oder Schwenktür bzw. Schwenktüren selbsttätig geöffnet werden, so dass die jeweilige Person in den mittels der Durchgangskontrollvorrichtung gesicherten Bereich gelangt oder der Durchgang verweigert werden. In diesem Falle wird die, dem Eingang in den Durchgangsbereich gegenüberliegende Absperrung des Durchgangsbereiches, die ansonsten den Durchgang in den gesicherten Bereich erlaubt, vorzugsweise selbsttätig, mittels eines entsprechenden Steuersignals der zentralen Überwachungseinheit gesperrt oder von dem Überwachungspersonal manuell durch Auslösung eines Sperrsignals blockiert.

In der Regel wird dann eine Überprüfung der in dem Durchgangsbereich tatsächlich vorhandenen Personen durch entsprechendes Sicherheitspersonal vorgenommen werden.

Zur Erhöhung der Erfassungsgenauigkeit der Durchgangskontrollvorrichtung kann den, den Durchgang beidseitig begrenzenden Absperrungen oder Seitenwänden, eine weitere Funktion als Vergleichsnormal derart zukommen, zukommen, indem der Erfassungsbereich der Kamera oder Kameras jeweils auf einen definierten Bereich der Seitenwände ausgerichtet wird, dessen Abmessungen bekannt sind, also in der Auswerteeinheit gespeichert sind, so dass auf der Basis dieses Vergleichsnormals, Rückschlüsse etwa auf die Größe der Personen oder erfasster definierter Körperteile der Personen ermöglicht ist.

Dies erhöht zum einen die Genauigkeit der Personenerkennung, insbesondere der Personenanzahl und stellt darüber hinaus einen Kontrollmechanismus der Auswertung der erfassten Bilddaten hinsichtlich Ihrer Plausibilität dar.

Die Erfindung wird nachstehend anhand eines Ausführungsbeispiels näher erläutert.

Es zeigen:
- Fig. 1: eine Durchgangskontrollvorrichtung in der Seitenansicht

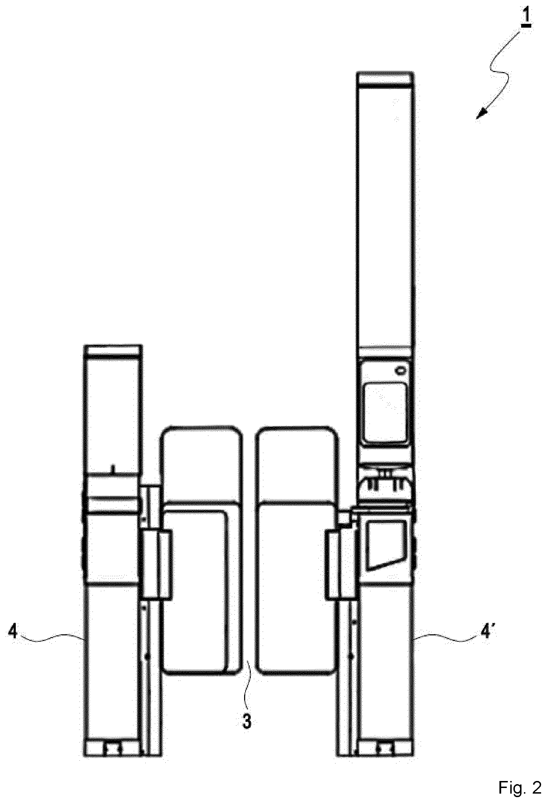

- Fig. 2: die Durchgangskontrollvorrichtung in einer Draufsicht von oben
- Fig. 3: die Durchgangskontrollvorrichtung in einer perspektivischen Ansicht

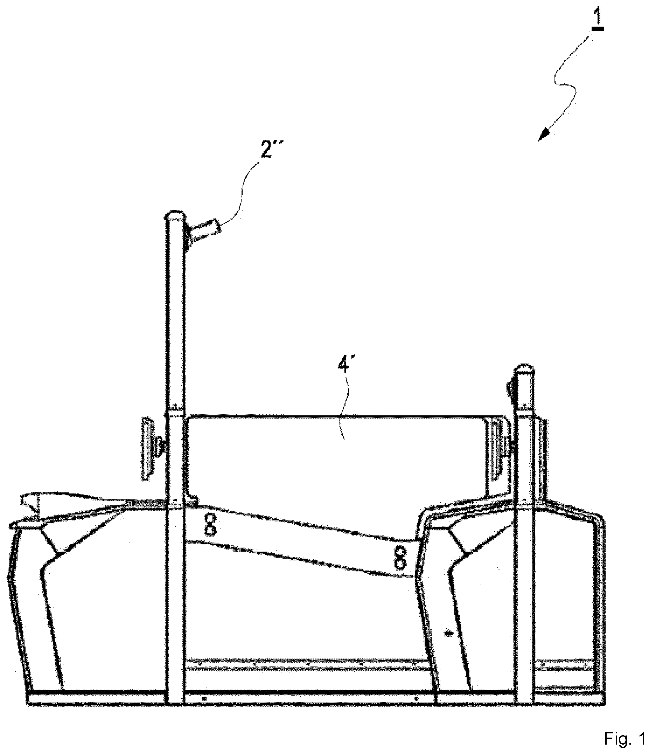

Fig. 1 zeigt eine an sich bekannte Durchgangskontrollvorrichtung (1), wie sie überall dort eingesetzt wird wo Personen von einem ungesicherten Bereich in einen gesicherten Bereich nach entsprechender Überprüfung der Zugangsberechtigung gelangen können. Derartige Anlagen werden beispielsweise in Flughäfen, Gerichten und sonstigen gesicherten Bereichen eingesetzt.

Üblicherweise weisen sich die Personen, die die Durchgangskontrollvorrichtung 1 passieren wollen jeweils als zugangsberechtigt etwa dadurch aus, dass einer entsprechenden Prüfeinheit, die dem eigentlichen gesicherten Durchgangsbereich 3 vorgelagert ist, mittels eines Legitimationsnachweises, entweder in Papierform etwa mit Hilfe eines Ausdrucks, der mit einem Barcode oder einer sonstig verschlüsselten Zugangsberechtigung versehen ist aus oder mittels einer auf beispielsweise auf einem Mobiltelefon gespeicherten Zugangsberechtigung, wiederum bevorzugt in Form eines Barcodes.

Diese Zugangsberechtigung wird von einer, dem zunächst versperrten Durchgang durch die Durchgangskontrollvorrichtung 1 vorgelagerten Erfassungseinheit 5, überprüft, indem der hierzu entsprechende Legitimationsnachweis präsentiert wird, sowie anschließend von der erwähnten Erfassungseinheit 5 geprüft wird, wobei dann in Abhängigkeit von dieser Prüfung entweder der Zugang verweigert wird, also die den Zugang zu dem Durchgangsbereich 3 vorgelagerten Sperrelemente, etwa jeweils elektromotorische angetriebene Drehkreuze oder Schwenktüren 6, 6' verschlossen bleiben oder aber der Zugang freigegeben wird, so dass die zugangsberechtigten Person in die eigentliche Durchgangskontrollvorrichtung 1 eintritt.

Das Betreten der Durchgangskontrollvorrichtung 1 wird beispielsweise mittels einer Lichtschranke erkannt. Nachdem auf diesem Wege erkannt wurde, dass die jeweilige Person die Durchgangskontrollvorrichtung 1 betreten hat, schließen sich die der Durchgangskontrollvorrichtung vorgelagerten Sperrelemente, 6, 6' wieder. Somit ist ein Verlassen der Durchgangskontrollvorrichtung 1 entgegen der vorgegebenen Durchgangsrichtung verhindert bzw. zumindest erschwert.

Die fragliche Person befindet sich nun innerhalb der eigentlichen Durchgangskontrollvorrichtung 1, wobei die dem Zugang zu Durchgangskontrollvorrichtung gegenüberliegenden Sperrelemente oder Schwenktüren 7, 7' nach dem Betreten des Durchgangsbereichs 3 zunächst weiterhin verschlossen sind. Im Ergebnis befindet sich also nunmehr die Person in einem vollständig gesicherten Durchgangsbereich 3, der in Durchgangsrichtung von den jeweiligen Sperberelementen oder Schwenktüren 6, 6', 7, 7'sowohl in Vorwärtsrichtung als auch in Rückwärtsrichtung blockiert ist, sowie beidseitig von entsprechenden Seitenwänden 4, 4' abgeschlossen ist.

Diese kurze Verweildauer der Person in der Durchgangskontrollvorrichtung 1 kann zu einer Überprüfung genutzt werden, mit der sichergestellt ist, dass sich innerhalb der besagten Durchgangskontrollvorrichtung 1 jeweils nur eine Person befindet, so dass sichergestellt ist, dass nicht i.V.m. der legitimierten Person eine nicht legitimierte Person mit in den Bereich der Durchgangskontrollvorrichtung 1 eingetreten ist und somit im Ergebnis diese zweite Person ohne Überprüfung in den in Durchgangsrichtung hinter der Durchgangskontrollvorrichtung 1 befindlichen, gesicherten Bereich, eindringen kann.

Dementsprechend soll also mittels der erfindungsgemäßen Durchgangskontrollvorrichtung 1 eine Vereinzelung der die Durchgangskontrollvorrichtung 1 passierenden Personen sichergestellt sein.

Die Erfindung schlägt insoweit zwei unterschiedliche Verfahren zur Überprüfung der Personenzahl der im Durchgangsbereich 3 befindlichen Personen vor.

Gemäß einem ersten Verfahren, ist der Durchgangsbereich 3 mit wenigstens zwei Kameras 2, 2' derart bestückt, dass eine der beiden Kameras 2 im Bereich des Ausgangs aus der Durchgangskontrollvorrichtung 1 angeordnet ist, während die andere Kamera 2' im Bereich des Eingangs in die Durchgangskontrollvorrichtung 1 angeordnet ist.

Somit blickt die eine Kamera 2 von vorne auf die, in den Durchgangsbereich 3 eingetretene Person, während die andere Kamera 2' die Person in der Rückansicht erfasst.

Diese Bilder werden dann an eine Auswertungsvorrichtung übermittelt, mittels der dann anhand der Frontaufnahme der Kamera 2 der ihm Durchgangsbereich befindlichen Person oder Personen, in Zusammenschau mit der rückseitigen Aufnahme der Peron oder Personen der Kamera 2' ein Abgleich der Aufnahmen dahingehend erfolgt, ob es sich gemäß der Frontansicht und der Rückansicht um ein und dieselbe Person oder ggf. um mehrere, insbesondere um 2 Personen, handelt. In diesem Falle sperrt die Auswertungsvorrichtung den Durchgang in den gesicherten Bereich, indem die, dem gesicherten Bereich vorgelagerten Sperberelemente oder Schwenktüren 7, 7'verschlossen bleiben. Zusätzlich übermittelt die Auswertungseinrichtung ein digitales Signal an das jeweilige Wachpersonal, dass gegebenenfalls von einem Warn- oder Signalton begleitet wird. In Reaktion hierauf kann dann eine Überprüfung des Durchgangsbereich 3 daraufhin erfolgen, ob sich in diesem Bereich eine oder mehrere Personen befinden. Es ist daher nicht möglich oder zumindest deutlich erschwert, dass eine nicht kontrollierte Person, durch den Durchgangsbereich 3 in den nachgelagerten gesicherten Bereich gelangen kann.

In abermals alternativer Ausgestaltung, kann der Durchgangsbereich auch mittels einer weiteren Kamera überwacht werden, die Oberhalb des Durchgangbereichs 3, also deckenseitig derart angeordnet ist, dass die Kamera von oben auf den nach oben offenen Durchgangsbereich 3 blickt, wobei insoweit mit dieser Kamera eine oder mehrere Aufnahmen aus der Vogelperspektive aufgenommen und an die erwähnte Auswertungseinheit übermittelt werden.

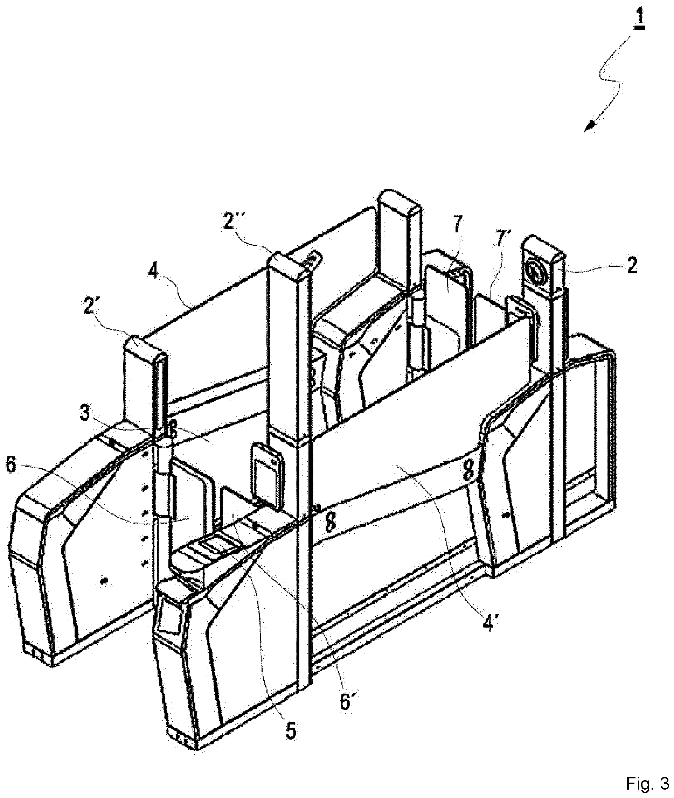

Alternativ kann die Kamera 2' auch mittels eines Stativs, wie in Fig. 3 dargestellt, auf den von dem Durchgangsbereich 3 umfassten Bereich blicken und somit ebenfalls eine Aufnahme der Situation in dem Durchgangsbereich 1 aus der Vogelperspektive aufnehmen und an die Auswertungseinheit übermitteln.

In beiden Ausführungen ermöglicht die erhöhte Anordnung einer oder mehrerer Kameras 2"einen Blick aus der Vogelperspektive auf die Situation in dem Durchgangsbereich 3. Insbesondere kann aus dieser Vogelperspektive mit an Sicherheit grenzender Wahrscheinlichkeit erkannt werden, ob sich in dem Durchgangsbereich 3 eine oder mehrere Personen aufhalten. Sobald die Auswertungseinheit mehrere Personen feststellt, wird wiederum ein Signal an das Überwachungspersonal übermittelt und/oder ein Alarmsignal ausgelöst.

Gemäß einer weiteren Ausführung der Erfindung, kann die Anzahl der sich im Durchgansgereich 3 befindlichen Personen auch mittels einer oder mehrerer in die Seitenwände integrierter Kameras erfolgen, die dementsprechend eine Seitenansicht der sich in dem Durchgangsbereich 3 befindlichen Person oder Personen erfasst. Dies deshalb, weil die Seitenansicht insbesondere erkennen lässt, ob einer ersten legitimierten Person in dem Durchgangsbereich unmittelbar eine möglicherweise nicht legitimierte Person, im direkten Anschluss nachfolgt.

In einer verbesserten Ausführung dieser seitlichen Personenerfassung, kann die seitliche Erfassung der Person oder Personen vor einer in Ihren Abmessungen definierten Referenzfläche derart erfolgen, dass die Kamera 2‴ in eine Seitenwand 4 integriert ist, mit Blickrichtung auf die gegenüberliegende Seitenwand 4', wobei die Abmessungen dieser gegenüberliegenden Seitenwand 4' in er Auswertungseinheit gespeichert sind, so dass die Auswertung des mittels der seitlichen Kamera 2‴aufgenommenen Bildes in Relation zu den Abmessungen, insbesondere der Breite und Höhe der gegenüberliegenden Seitenwand ermöglicht ist.

Auf diesem Wege kann mittels der Auswertung der Seitenansicht weitestgehend fehlerfrei erkannt werden, ob sich eine oder mehrere Personen in dem Durchgangsbereich 3 aufhalten.

In weiter verbesserter Ausführung, wird auf der, der Seitenwand mit integrierter Kamera 2‴ gegenüberliegenden Seitenwand, eine Referenzfläche mit definierten Abmessungen definiert, die wiederum in der Auswertungseinheit gespeichert ist, so dass mittels der Kamera 2‴ ein Bild der den Durchgangsbereich 3 passierenden Person oder Personen vor der Referenzfläche aufgenommen, so dass mittels der Auswertungseinheit die Abmessungen der den Durchgangsbereich 3 passierenden Person oder Personen ausgewertet werden und bei Überschreitung eines in der Auswertungseinheit gespeicherten Grenzwertes, der auf mehr als eine passierende Person schließen lässt, mittels eines einfachen Vergleiches der weitere Durchgang blockiert wird, also insbesondere die ausgangsseitigen Schwenktüren 7, 7' nicht geöffnet werden, bis eine weitere Überprüfung der in dem Durchgangsbereich 3 passierenden Person oder Personen erfolgt ist.

### BEZUGSZEICHENLISTE

- 1: Durchgangskontrollvorrichtung
- 2: Kamera mit Sicht von vorn
- 2': Kamera mit Sicht von hinten
- 2ʺ: Kamera mit Sicht aus der Vogelperspektive
- 2‴: Kamera mit Seitenansicht
- 3: Durchgangsbereich
- 4: Seitenwand
- 4': Seitenwand
- 5: Erfassungseinheit
- 6: Schwenktür
- 6': Schwenktür
- 7: Schwenktür
- 7': Schwenktür

## Patentansprüche

1. Durchgangskontrollvorrichtung zur Sicherung der Vereinzelung von Personen, die von einem ungesicherten Bereich in einen gesicherten Bereich wechseln unter Einsatz einer oder mehrerer Kameras (2, 2', 2ʺ, 2‴), insbesondere 3D-Kameras, die etwa durch den Einsatz von Stereosystemen die Aufnahme eines dreidimensionalen räumlichen Bildes ermöglichen, um beispielsweise Abstände zwischen einen Durchgangsbereich (3) passierenden Personen durch eine 3-D-Darstellung zu ermöglichen, **dadurch gekennzeichnet, dass** mittels einer nachgeschalteten Bildauswertung, die zur Erkennung verschiedener, vorbestimmter zur Erkennung vorgesehener Körperteile des menschlichen Körpers ertüchtig sind, sodass auf der Basis dieser Informationen jeweils ein Skelettbild einer jeden die Durchgangskontrollvorrichtung (1) passierenden Person erzeugt wird, so dass die Anzahl der die Durchgangskontrollvorrichtung (1) passierenden Personen, der Anzahl der erkannten Skelettbilder entspricht.

2. Durchgangskontrollvorrichtung nach Anspruch 1, **dadurch gekennzeichnet, dass** zur Überwachung, eine oder mehrere, insbesondere 2 3D-Kameras (2, 2') mit unterschiedlicher Ausrichtung, zur Überwachung des Durchgangsbereiches eingesetzt werden.

3. Durchgangskontrollvorrichtung nach Anspruch 1 oder 2, **dadurch gekennzeichnet, dass** die wenigstens zwei zur Überwachung des Durchgangsbereiches (3) eingesetzten Kameras (2, 2') so installiert sind, dass eine Personenerkennung aus zwei unterschiedlichen, also gegeneinander versetzten, seitlichen Perspektiven erfolgt, sowie anschließend im Wege einer nachgeschalteten Bildanalyse, mithilfe eines Algorithmus eine Auswertung der mittels der Kameras (2, 2') aufgenommenen 3D Bilder vorgenommen wird, sowie auf der Basis dieser Auswertung ein oder mehrere erkannte Skelette zur Symbolisierung der Anzahl der den Durchgangsbereich (3) passierenden Personen anzeigbar ist.

4. Durchgangskontrollvorrichtung nach Anspruch 1 oder 2, **dadurch gekennzeichnet ,dass** wenigstens zwei zur Überwachung des Durchgangsbereiches (3) eingesetzte 3-D Kameras so installiert sind, dass eine 3D- Kamera (2") aus der Vogelperspektive auf den Durchgangsbereich (3) ausgerichtet ist, sowie die andere 3D-Kamera (2‴), in einer Seitenansicht auf den Durchgangsbereich (3) ausgerichtet ist, sowie anschließend im Wege einer nachgeschalteten Bildanalyse, mithilfe eines Algorithmus eine Auswertung der mittels der Kameras (2", 2‴) aufgenommenen 3D-Bilder vorgenommen wird, sowie auf der Basis dieser Auswertung ein oder mehrere erkannte Skelette zur Symbolisierung der Anzahl der den Durchgangsbereich (3) passierenden Personen, etwa auf einem Bildschirm, anzeigbar ist.

5. Durchgangskontrollvorrichtung nach einem oder mehrerer der vorhergehenden Ansprüche, **dadurch gekennzeichnet, dass** die der Bilderfassung nachgeschaltete Bildauswertung, über eine gesicherte Datenverbindung oder eine sonstige gesicherte Schnittstelle, das Ergebnis der Auswertung der mittels der Kameras (2, 2', 2", 2‴) aufgenommenen 3D-Bilder und insbesondere der auf der Basis dieser Auswertung erzeugten symbolhaften Anzeige der Anzahl der erkannten Personen in Form einer Bildwiedergabe, von einem oder mehreren Skeletten, an angeschlossene Datenverarbeitungseinheiten zur weiteren Auswertung übermittelt werden.

6. Durchgangskontrollvorrichtung nach Anspruch 5, **dadurch gekennzeichnet, dass** ein Übertritt aus der Durchgangskontrollvorrichtung (1) in einen gesicherten Bereich erst dann freigegeben wird, wenn entweder die Bildauswertung lediglich eine Person identifiziert hat oder aber der Durchgang von einer autorisierten Person, sowie ausnahmsweise nach entsprechender gesonderter Prüfung auch bei der Erkennung mehrerer Personen, freigegeben wird.

7. Durchgangskontrollvorrichtung nach einem oder mehrerer der vorhergehenden Ansprüche, **dadurch gekennzeichnet, dass** innerhalb des Durchgansbereiches (3) ein Erfassungsbereich definiert ist, innerhalb dessen eine Erfassung der in diesem Bereich befindlichen Person oder Personen erfolgt, mit einer anschließenden Auswertung der mittels der Bilderkennung erkannten Personenzahl, wobei hierzu in Abhängigkeit von den jeweiligen Räumlichkeiten entweder mittels zweier voneinander beabstandeter Kameras (2, 2') jeweils eine Frontalaufnahme der den Durchgang passierenden Person oder Personen und gleichzeitig eine rückseitige Aufnahme der den Durchgangsbereich (3) passierenden Person oder Personen erfasst wird oder mittels einer oberhalb der Durchgangsvorrichtung (1) angeordneten Kamera, also aus der Vogelperspektive, ein Bild der den Durchgangsbereich (3) passierenden Person oder Personen erfasst, wobei die derart erfassten Bilddateien an eine Auswerteeinheit übermittelt werden, wobei die Auswerteinheit über wenigstens zwei unterschiedliche Algorithmen zur Auswertung des Bildes oder der Bilder verfügt, je nach Aufnahme aus der Vogelperspektive oder der Aufnahme einer rückseitigen und frontalseitigen Aufnahme der den Durchgang passierenden Person.

8. Durchgangskontrollvorrichtung nach einem oder mehrerer der vorhergehenden Ansprüche, **dadurch gekennzeichnet, dass** die Durchgangskontrollvorrichtung (1) einen beidseitig mit je einer Seitenwand (4, 4') begrenzten Durchgang eröffnet, wobei vorzugsweise beide Seitenwände (4, 4') in einem rechten Winkel zum Boden, also lotrecht, angeordnet sind und die Seitenwände (4, 4'), vorzugsweise etwa einen Meter hoch sind.

9. Durchgangskontrollvorrichtung nach Anspruch 8, **dadurch gekennzeichnet, dass** innerhalb des, durch die beiden Seitenwände (4, 4') begrenzten Durchganges, ein jeweils von der oder den Kameras (4, 4') erfasster Detektionsbereich, sowie innerhalb des Durchgangsbereiches (3) eine Bezugsfläche mit bekannten Abmessungen, etwa ein Wandabschnitt mit definierten Abmessungen definiert wird, so dass die beim Durchgang einer oder mehrerer Personen deren Abmessungen bzw. Umfang in Relation zu der Bezugsfläche bestimmbar und damit die Anzahl der Person bzw. Personen bestimmbar sind.

10. Durchgangskontrollvorrichtung nach einem oder mehrerer der vorhergehenden Ansprüche, **dadurch gekennzeichnet**, aufgrund der erfassten Bilder, und oder der erfassten und erkannten Körperteile, mittels einer nachgeschalteten Auswertung der erfassten Daten eine Bildinformation, etwa durch Darstellung von 1, 2 oder mehr Skeletten anzeigbar ist, und/oder ein Signalton signalisiert, dass sich gemäß der Auswertung ein oder mehrere Personen in dem Durchgangsbereich befinden, wobei in Abhängigkeit von dieser Auswertung der weitere Durchgang durch die Durchgangskontrollvorrichtung (3) sperrbar oder freigebbar ist.
